# EUROPÄISCHE PATENTANMELDUNG

(11) **EP 3 090 935 A1**
(43) Veröffentlichungstag der Anmeldung: **09.11.2016**
(21) Anmeldenummer: 16159574.9
(22) Anmeldetag: 10.03.2016
(51) Int. Cl.: B62M 25/08

(54) **AUTOMATIKSCHALTUNG FÜR EIN FAHRRAD**

(30) Priorität: 05.05.2015 DE 102015208248
(71) Anmelder: ROBERT BOSCH GMBH, 70442 Stuttgart (DE)
(72) Erfinder: Dasbach, Gregor, 72074 Tuebingen (DE)

(57) **Zusammenfassung**

Die vorliegende Erfindung beansprucht ein Verfahren zur Einstellung einer Schaltung eines Fahrzeugs, z.B. die Gangschaltung eines Fahrrads, vor oder während einer Anfahrsituation. Darüber hinaus wird eine Steuereinheit beansprucht, die ein derartiges Verfahren durchführt, sowie ein Fahrzeug mit einer Schaltung, auf der ein derartiges Verfahren in einer Steuereinheit abläuft. Ausgehend von einer erkannten Anfahrsituation des Fahrzeugs wird eine Fahrwiderstandgröße und eine Antriebskraftgröße erfasst. Die Fahrwiderstandsgröße stellt dabei eine Größe dar, die den erwarteten Fahrwiderstand beim Anfahren repräsentiert, z.B. die Kraft, die notwendig ist, das Fahrzeug zu bewegen. Dieser Fahrwiderstandkraft steht die Antriebskraft entgegen, die vom Fahrzeug aufgebracht werden muss, um das Fahrzeug zu bewegen. Hierfür wird eine Antriebskraftgröße erfasst, die die zu erwartende Antriebskraft darstellt, die das Fahrzeug während des Anfahrvorgangs insgesamt aufbringen kann. So kann beispielsweise bei einem Elektrofahrrad diese Antriebskraftgröße teilweise sowohl aus der vom Fahrer aufgebrachten Tretkraft als auch durch den vorgesehenen Motor erzeugt werden. Der Kern der Erfindung besteht dabei darin, dass die Differenz der Antriebskraftgröße und der Fahrwiderstandgröße bei der Ansteuerung der Schaltung des Fahrzeugs berücksichtigt wird.

## Beschreibung

Die Erfindung betrifft eine Automatikschaltung für ein Fahrrad, insbesondere ein Elektrofahrrad, sowie ein Verfahren zum Betrieb einer derartigen Automatikschaltung.

### Stand der Technik

Der Antrieb eines Fahrzeugs erfordert eine Übertragung der Antriebskraft auf ein Abtriebsmittel, um den Vortrieb des Fahrzeugs zu bewerkstelligen. Um eine Variation des Antriebs bei verschiedenen Fahrbahnbedingungen zu erhalten, ist neben einer Anpassung der Antriebskraft auch eine Veränderung des Übertragungsverhältnisses möglich, beispielsweise mittels einer Gangschaltung oder allgemein einem Getriebe.

Während automatische Gangschaltungen bei Kraftfahrzeugen schon seit längerem bekannt sind, werden diese bei Fahrrädern erst seit der Einführung der Elektrofahrräder für den breiten Massenmarkt interessanter. Neben der erforderlichen Steuertechnik ist auch die Elektrifizierung bei derartigen Ebikes und Pedelecs einfacher zu realisieren.

Besondere Schwierigkeiten treten bei der automatischen Gangeinstellung beim Anfahrvorgang eines Fahrrads auf. Hierbei ist nicht zwingend der Gang mit der niedrigsten Übersetzung die optimalste Wahl. So können verschiedene Faktoren wie beispielsweise die Masse des Fahrzeugs, die Leistungsfähigkeit des Fahrers die gewählte Unterstützung bei Elektrofahrrädern aber auch die Steigung oder die Eigenschaften der Schaltung zu unterschiedlich geeigneten Gängen für den Anfahrvorgang führen. Mit der vorliegenden Erfindung wird daher eine Lösung vorgeschlagen, einen für den Anfahrvorgang geeigneten Gang auszuwählen und einzustellen.

### Offenbarung der Erfindung

Die vorliegende Erfindung beansprucht ein Verfahren zur Einstellung einer Schaltung eines Fahrzeugs, z.B. die Gangschaltung eines Fahrrads, vor oder während einer Anfahrsituation. Darüber hinaus wird eine Steuereinheit beansprucht, die ein derartiges Verfahren durchführt, sowie ein Fahrzeug mit einer Schaltung, auf der ein derartiges Verfahren in einer Steuereinheit abläuft. Ausgehend von einer erkannten Anfahrsituation des Fahrzeugs wird eine Fahrwiderstandgröße und eine Antriebskraftgröße erfasst. Die Fahrwiderstandsgröße stellt dabei eine Größe dar, die den erwarteten Fahrwiderstand beim Anfahren repräsentiert, z.B. die Kraft, die notwendig ist, das Fahrzeug zu bewegen. Dieser Fahrwiderstandkraft steht die Antriebskraft entgegen, die vom Fahrzeug aufgebracht werden muss, um das Fahrzeug zu bewegen. Hierfür wird eine Antriebskraftgröße erfasst, die die zu erwartende Antriebskraft darstellt, die das Fahrzeug während des Anfahrvorgangs insgesamt aufbringen kann. So kann beispielsweise bei einem Elektrofahrrad diese Antriebskraftgröße teilweise sowohl aus der vom Fahrer aufgebrachten Tretkraft als auch durch den vorgesehenen Motor erzeugt werden. Der Kern der Erfindung besteht dabei darin, dass die Differenz der Antriebskraftgröße und der Fahrwiderstandgröße bei der Ansteuerung der Schaltung des Fahrzeugs berücksichtigt wird.

Durch die Berücksichtigung der Differenz beider Größen kann die Schaltung in Abhängigkeit der Fahrzeugeigenschaften, Betriebsbedingungen und Umfeldbedingungen derart eingestellt werden, dass ein optimaler Gang gewählt wird. So ist beispielsweise bei einer Anfahrt bergauf ein anderer Gang sinnvoller als bei einer Anfahrt bergab. Auch kann ein zu niedriger Gang ohne entsprechenden Fahrwiderstand zu Beginn der Fahrt zu einer zu hohen Trittfrequenz führen, die für die meisten Fahrer neben dem Effizienzaspekt als unangenehm empfunden wird.

Tendenziell ist vorgesehen, dass bei einer kleinen Differenz der Antriebskraftgröße und der Fahrwiderstandsgröße ein niedriger Gang eingestellt wird, da davon ausgegangen werden kann, dass der kleine Antriebskraftüberschuss mit einer niedrigen Übersetzung besser zur Fortbewegung umgesetzt werden kann. Dies wird beispielsweise bei der Anfahrt eines Fahrrads an einem Berg deutlich, bei dem ein hoher Gang dazu führen würde, dass nur durchtrainierte Fahrradfahrer von der Stelle kommen können. Entsprechend können bei einer hohen Differenz auch hohe Gänge effektiv für die Kraftumwandlung auf den Vortrieb sein.

Zur Erfassung der Fahrwiderstandsgröße können die Umfeldbedingungen, wie beispielsweise der Neigungswinkel des Fahrzeugs auf der Fahrbahn herangezogen werden. Denkbar wäre hier auch die Berücksichtigung des Gegenwinds.

Alternativ oder zusätzlich kann auch das Gesamtgewicht des Fahrzeugs berücksichtigt werden. Das Gesamtgewicht, bestehend aus Gewicht des Fahrzeugs, des Anhängers, des Fahrers und/oder der Beladung kann mittels eines oder mehrerer Sensoren direkt erfasst, als Standardwert berücksichtigt oder als Schätzwert berechnet werden. Der Schätzwert kann dabei beispielsweise aus der Dynamik vorherigen Betriebsbedingungen abgeleitet werden, z.B. als Mittelwert aus verschiedenen Brems- oder Beschleunigungsvorgängen. Auch hier gilt, dass der Gang umso höher eingestellt werden kann, je geringer die Gesamtmasse ist.

Bei der Verwendung des Verfahrens bzw. der Steuereinheit für ein Fahrrad kann für die Antriebsgröße die vom Fahrradfahrer aufgebrachte Trittkraft erfasst werden. Hierzu wird eine Tretkraftgröße erfasst, die die auf das Pedal wirkenden Trittkraft, das durch den Tritt erzeugte Drehmoment auf die Tretkurbel und/oder die Drehgeschwindigkeit der Kurbel repräsentiert.

Weiterhin kann bei einem Elektrofahrrad die Motorkraft des zum Antrieb genutzten Motors erfasst werden, um daraus die Antriebskraftgröße abzuleiten, ggf. als zusätzliche Größe zur Trittkraftgröße. Darüber hinaus kann aber auch das Verhältnis des durch den Fahrer per Muskelkraft erzeugten Antriebs und das per Motorkraft erzeugten Antriebs bei der Ermittlung der Antriebsgröße berücksichtigt werden. Dieses (Verstärkungs-)Verhältnis wird normalerweise als Unterstützungsstufe bezeichnet und kann unterschiedlich ausgestaltet sein. So ist denkbar, dass eine energiesparende Unterstützungsstufe ein größeres Verhältnis als eine sportliche Unterstützungsstufe zeigt. Dies lässt sich dadurch erklären, dass z.B. bei einer sportlichen Unterstützungsstufe schon bei kleinen Trittkraftgrößen eine relativ hohe Unterstützung durch den zugeschalteten Motor erwünscht ist.

Optional kann auch vorgesehen sein, dass die Tretkraftgröße beim Anfahren nicht direkt erfasst wird sondern aufgrund von vorherigen Betriebssituationen als Speicherwert vorliegt. So können aus typischen Betriebssituationen wir Beschleunigungen oder Anfahrsituationen mittels der Erfassung direkter Tretkraftgrößen oder abgeleitet aus dem Bewegungsverhalten entsprechende Werte abgeleitet werden. Diese zu früheren Zeitpunkten ermittelten Tretkraftgrößen können dann für den aktuellen Anfahrvorgang berücksichtigt werden. Voraussetzung ist dabei selbstverständlich, dass sich der Fahrer nicht geändert hat. Hierbei wäre ggf. eine gesonderte Überprüfung möglich, die bestätigt, dass es sich um den Fahrer handelt, zu dem entsprechende Werte vorliegen. Bei Elektrofahrrädern mit einem Bedienelement könnte hier z.B. eine Eingabe mittels Identifikation verwendet werden, die es ermöglicht, unterschiedliche Profile zu verschiedenen Personen auf dem gleichen Fahrrad zu verwenden.

Die Betätigung der Schaltung kann darüber hinaus auch davon abhängen, welcher Gang vor dem Anfahren eingestellt war und wie die Schaltdynamik der Schaltung ausgestaltet ist. Da der Anfahrvorgang üblicherweise in einem kurzen Zeitraum erfolgt, bzw. in einem kurzen Zeitraum erkannt werden muss, kann es vorkommen, dass nicht der komplette vorgesehene Hub durchgeführt werden kann. In so einem Fall wird zumindest der noch für die Zielerreichung erreichbare Gang eingestellt, der in der zur Verfügung stehenden Zeit einstellbar ist.

Darüber hinaus ist auch denkbar, dass die Schaltung zusätzlich während der Anfahrbewegung weiterhin geschalten wird, um die während des Anfahrvorgangs veränderten Anfahrbedingungen, Betriebsbedingungen und/oder Umfeldbedingungen in die Einstellung der Schaltung einfließen zu lassen. Hierdurch wird ein schnelles Hochschalten bei der Beschleunigung während des Anfahrens erreicht, die auf die Leistungsfähigkeit des Fahrers angepasst ist.

In einer alternativen Ausgestaltung der Erfindung kann vorgesehen sein, dass die Anfahrsituation aus der Erkennung einer Haltesituation erkannt wird, in der das Fahrzeugs zum Stillstand kommt oder zumindest derart abgebremst wird, dass die Wiederanfahrt weitestgehend einer Anfahrsituation entspricht. Dies könnte beispielsweise der Falls ein, wenn sich Fahrzeug weniger als 0,5 bis 1 km/h bewegt. Hierzu werden die Betriebsgrößen des Fahrzeugs wie beispielsweise die Geschwindigkeit oder das Abbremsverhalten ggf. um externe Parameter wie Navigations-, Umfeld- und/oder Nutzungsinformationen ergänzt. Denkbar ist beispielsweise, dass typische Haltepunkte per GPS abgespeichert werden und so für die Erkennung einer Anfahrsituation zur Verfügung stehen. Für den Fall dieser vorausschauenden Erkennung der Anfahrsituation ermöglicht das vorstehende Verfahren sowie die vorstehende Vorrichtung, dass die Schaltung für den Anfahrvorgang bereits kurz vor oder beim Anhalten in den für die Anfahrsituation günstige Stellung geschalten wird. Durch diese vorausschauende Einstellung wird ein Schalten während des Anfahrvorgangs vermieden, so dass das Material geschont werden kann und der Fahrer ein besseres Komfortgefühl erfährt.

Weitere Vorteile ergeben sich aus der nachfolgenden Beschreibung von Ausführungsbeispielen bzw. aus den abhängigen Patentansprüchen.

### Kurze Beschreibung der Zeichnungen

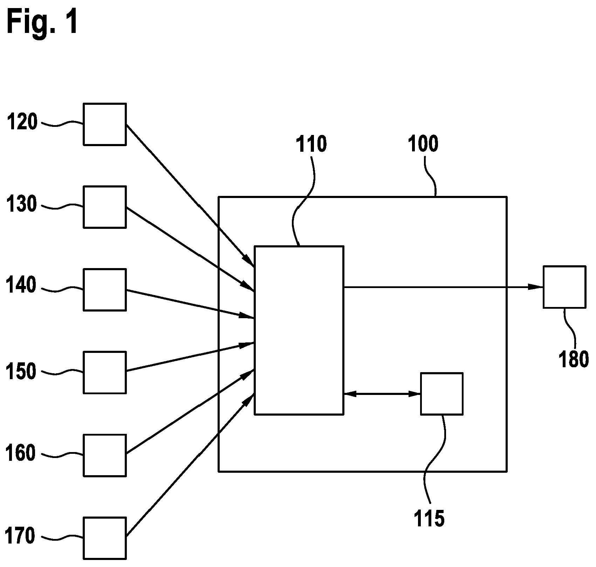

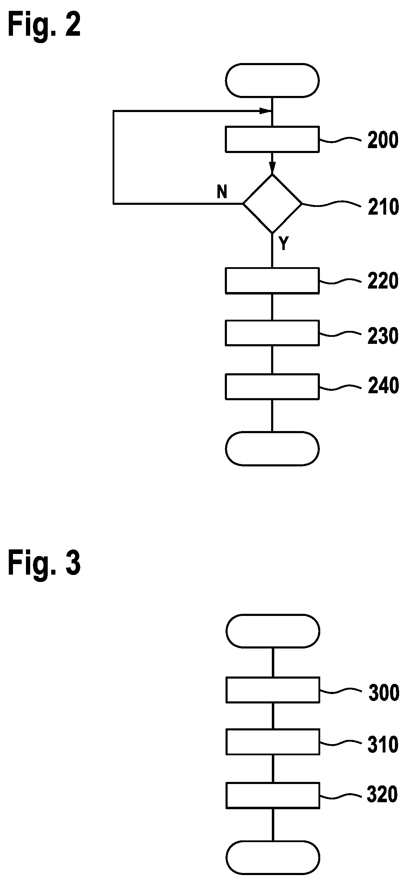

In der Figur 1 ist anhand eines Blockschaltbildes die erfindungsgemäße Steuereinheit dargestellt. Mittels des Ablaufdiagramms in der Figur 2 wird das erfindungsgemäße Verfahren, welches in der Verarbeitungseinheit abläuft, näher beschrieben. Im Ablaufdiagramm der Figur 3 ist eine optionale Ausführung des erfindungsgemäßen Verfahrens dargestellt.

### Offenbarung der Erfindung

Automatikschaltungen sowohl bei Kraftfahrzeugen als auch bei Fahrrädern werden immer beliebter, da sie zum Einen die direkt erforderlichen Eingriffe des Fahrers während der Fahrt reduzieren und zum Anderen die Schaltung effizienter werden lassen. Durch die Berücksichtigung des vom Fahrzeug erzeugten Antriebs, der Geschwindigkeitsvorgabe des Fahrers und ggf. der Umfeldbedingungen kann so schnell ein für diese Bedingungen geeigneter Gang eingelegt werden.

Mit dem nachfolgenden Ausführungsbeispiel wird die Erfindung anhand eines Elektrofahrrads beschrieben, bei dem sowohl der Fahrer als auch ein Motor einen Anteil zum Antrieb beitragen. Selbstverständlich lässt sich die Erfindung jedoch auch bei einem Kraftfahrzeug oder einem Fahrrad ohne zusätzlichem Motor realisieren, wobei bei diesen Ausführungen ggf. nur ein Teil der nachfolgenden Sensorik und/oder der aufgeführten Verarbeitung vorhanden ist.

Figur 1 stellt eine Steuereinheit 100 dar, wie sie beispielsweise bei einem Elektrofahrrad (E-Bike, Pedelec) zur Steuerung des Motors verwendet wird. Darüber hinaus kann diese Steuereinheit 100 jedoch auch eine eigenständige Vorrichtung darstellen, die unabhängig von anderweitig vorhandenen Steuerungen oder Regelungen im Fahrrad bzw. Elektrofahrrad vorgesehen ist. Die Steuereinheit 100 weist eine Auswerteeinheit 110 auf, die mit einem Speicher 115 verbunden ist. In dem Speicher können sowohl fahrzeug- oder umfeldtypische Größen als auch Betriebsgrößen abgespeichert sein, die im Laufe des Betriebs erhoben worden sind. Optional kann auch extern auf den Speicher zugegriffen werden, um einzelne der abgespeicherten Größen auszulesen, abzuändern oder zu ergänzen. Denkbar ist beispielsweise, dass Gewichtsangaben eingegeben werden können, die das Fahrergewicht, das Fahrzeuggewicht, die Beladung und/oder das Gewicht des Anhängers repräsentieren. Zur Erkennung einer Anfahrsituation, d.h. einer Bedingung, in der sich das (Elektro-) Fahrrad in Bewegung setzt, kann mittels eines geeigneten Bewegungssensors 120 die Bewegung des (Elektro-)Fahrrads, d.h. beispielsweise die Geschwindigkeit und/oder die Beschleunigung, erfasst werden. Die Auswerteeinheit 110 liest zudem die Messgrößen eines oder mehrerer Sensorgrößen ein, die zur Erkennung der Anfahrsituation und/oder der geeigneten Einstellung der Gangschaltung 180 herangezogen werden. So kann beispielsweise mit einem Steigungssensor 130 der Neigungswinkel des (Elektro-) Fahrrads zur Fahrbahn erfasst werden. Wird das Gewicht des (Elektro-)Fahrrads, des Fahrers, einen Anhängers und/oder einer Beladung nicht aus dem vorherigen Fahrverhalten abgeleitet, kann es mit einem oder mehreren Gewichtssensoren 140 erfasst werden. Sofern die Steuereinheit 100 nicht schon selber die Unterstützungsstufe des Elektrofahrrads verarbeitet, d.h. das einstellbare Verhältnis von aufgebrachter Tretleistung durch den Fahrer zur Unterstützung des Antriebs durch den Motor, kann durch eine entsprechende Abfrage beim externen Steuergerät 150 dieser Wert erfasst werden. Mit einem entsprechenden Tretraftsensor 160 kann die Trittkraft des Fahrers erfasst werden. Dies kann beispielsweise in Form eines Pedalkraftsensors, aber auch durch einen Drehfrequenzsensor oder einen Drehmomentsensors an der Tretkurbel geschehen. Weiterhin ist möglich, den aktuell eingelegten Gang durch einen geeigneten Schaltungssensor 170 zu erfassen.

In der Auswerteeinheit 110 wird basierend auf einer oder mehrerer erfasster oder ermittelter Größen eine Anfahrt des (Elektro-) Fahrrads erkannt und davon abhängig eine Schaltung der Gangschaltung 180 vorgenommen. Entsprechende Algorithmen, die diese Verfahren durchlaufen, sind in den Flussdiagrammen der Figuren 2 und 3 dargestellt.

Gemäß dem Ablaufdiagramm der Figur 2 wird nach dem Start des Verfahrens im Schritt 200 die Erfassung von Größen gestartet, die eine Anfahrsituation erkennen lassen. Dies können alle (physikalischen) Größen sein, die eine Bewegung des (Elektro-)Fahrrads mit dem Ziel einer Fortbewegung anzeigen. Neben eindeutigen Größen wie Geschwindigkeit und/oder Beschleunigung, insbesondere in die Fahrtrichtung, können jedoch auch typische Aufstiegsverhalten auf das Fahrrad, wie beispielsweise ein seitliches Verkippen, oder ein bewusstes Starten des Antriebsmittels bzw. des Motors erfasst werden. Wird eine derartige Anfahrbedingung im nachfolgenden Schritt 210 erfasst, werden im nächsten Schritt 220 die Fahrwiderstandsgröße sowie die Antriebskraftgröße erfasst. Falls keine Anfahrbedingung erkannt wird, kann das Verfahren beendet werden oder erneut mit dem Schritt 200 durchlaufen werden. Optional kann sich an den Schritt 220 ein Schritt 230 anschließen, in dem die Schaltdynamik der verwendeten Schaltung erfasst wird, beispielsweise durch ein Auslesen des Speichers 115, bevor eine Ansteuerung der Schaltung in Schritt 240 erfolgt. Die Ansteuerung der Schaltung und somit die Einstellung des geeigneten Gangs für die Anfahrbedingung hängt dabei von der Differenz der Antriebskraftgröße und der Fahrwiderstandsgröße ab. Bei einer stufenlosen Schaltung kann diese Abhängigkeit ebenfalls stufenlos erfolgen, wobei bei klassischen Gangschaltungen gewisse angrenzende Wertebereiche vorgesehen sind, die jeweils einem Gang zugeordnet sind. Generell kann jedoch festgelegt werden, dass bei einer hohen Differenz, d.h. eines hohen Überwiegens der Antriebskraftgröße, tendenziell ein hoher Gang dem entsprechenden Wertebereich zugeordnet ist. Demgegenüber wird bei einer kleinen Differenz tendenziell ein kleiner Gang dem entsprechenden Wertebereich zugeordnet. Abhängig von der Schaltdynamik und den Einstellmöglichkeiten (bei einer Schaltungsmöglichkeit an der Tretkurbel und am Hinterrad sind beide Stellmöglichkeiten, die Führung der Kette sowie doppelte Belegung der Gänge bei unterschiedlichen Einstellung zu berücksichtigen) kann auch ein Gang gewählt werden, der nicht direkt dem Wertebereich der Differenz entspricht. Stattdessen kann ein Gang gewählt werden, der mit vertretbarem mechanischen Aufwand erreichbar ist und ebenfalls eine Erleichterung des Anfahrens gegenüber dem bestehenden Gang ermöglicht. Eine Weiterschaltung in den als optimal identifizierten Gang ist jedoch während des Anfahrens möglich, sofern erkannt wird, dass dadurch keine Komforteinbuße vorliegt. Nach einer möglichen Abspeicherung des für die Anfahrt verwendeten Gangs für spätere Anfahrsituationen kann nach der Einstellung des Gangs das Verfahren beendet werden. Die abgespeicherten Werte für den optimalen Gang für einen Anfahrvorgang können beim nächsten Anfahren erneut verwendet werden, sofern sich die Rahmenbedingungen nicht wesentlich geändert haben.

In dem Ablaufdiagramm der Figur 3 wird die Erfassung der erwarteten Fahrwiderstandsgröße sowie der erwarteten Antriebskraftgröße verdeutlicht, wie sie beispielsweise im Schritt 220 durchgeführt werden. Beide Größen können eigenständig in separaten Verfahren oder wie im vorliegenden Beispiel mittels eines gemeinsamen Verfahrens erfasst bzw. ermittelt werden. Nach dem Start werden in einem Schritt 300 zumindest die für die Ermittlung des Fahrwiderstands sowie der Antriebskraft notwendigen Größen erfasst. So ist beispielsweise für den Fahrwiderstand die Erfassung des Neigungswinkels, der die Fahrbahnneigung anzeigt, oder einer Masse relevant. Letztere kann entweder mittels eines oder mehrerer Sensoren erfasst, manuell eingegeben und/oder mittels eines Algorithmus aufgrund vorhergehender Betriebssituationen, z.B. Bremsvorgängen oder Beschleunigungsvorgängen, abgeschätzt werden. Für die Antriebskraftgröße wird dagegen wenigstens eine Größe erfasst, die den Antrieb und somit den zu erwartenden Vortrieb charakterisiert und somit eine Anfahrt erkennen lässt. So kann bei einem Fahrrad die Tretkraft des Fahrers in Form der Pedalkraft, eines erzeugten Drehmoment und/oder einer Drehfrequenz an der Kurbel erfasst werden. Optional oder zusätzlich kann auch der Antrieb durch einen am Fahrrad befindlichen Motor erfasst und berücksichtigt werden. Weiterhin kann bei einem (Elektro-) Fahrrad die Unterstützungsstufe berücksichtigt werden, die das Verhältnis zwischen der durch den Motor aufgebrachten Antriebskraft zu der vom Fahrer aufgebrachten Kraft wiederspiegelt. Anschließend wird im Schritt 310 der aktuelle Betriebszustand der Schaltung, z.B. der eingelegte Gang, sowie ggf. die Schaltungseigenschaften erfasst. Letztere können sowohl als Datenwert aus dem Speicher 115 ausgelesen werden als auch mittels entsprechender Sensorik direkt erfasst werden. Im optionalen nachfolgenden Schritt 320 kann eine Differenzbildung der Antriebskraftgröße und der Fahrwiderstandsgröße gebildet werden. Dieser Schritt kann jedoch auch direkt in Verbindung mit der Steuerung der Schaltung durchgeführt werden, wie er zum Schritt 240 beschrieben wird.

Wie bereits erwähnt, können die Einstellungen für die Gangschaltung für den Anfahrvorgang abgespeichert werden, um sie für weitere Anfahrvorgänge nutzen zu können. Hierbei könnte auch eine Initialeinstellung basierend auf den letzten Einstellungen vorgesehen sein, die während des Anfahrvorgang überprüft wird. Sollten sich bei der Überprüfung neue Einstellungen ergeben, könnten diese neuen Einstellungen für den dann folgenden Anfahrvorgang abgespeichert werden. Somit würden sich selbst anpassende Einstellungen ergeben.

In einer weiteren Ausführungsform der Erfindung kann die Einstellung des Gangs für den Anfahrvorgang bereits beim Haltevorgang bzw. Abstellvorgang des Fahrzeugs vorgenommen werden. Hierzu kann ein System oder ein Verfahren verwendet werden, welches den Haltevorgang und somit eine zukünftige Anfahrsituation erkennt. Basierend auf den dann vorliegenden Größen für den zu erwartenden Fahrwiderstand und den Antrieb, kann beim Halten bzw. Abstellen des Fahrzeugs die Schaltung entsprechend der vorstehenden Beschreibung eingestellt werden. Hierdurch liegt bereits beim tatsächlich eingeleiteten Anfahrvorgang die für diese Anfahrsituation günstigste Schalteinstellung vor.

## Patentansprüche

1. Verfahren zur Einstellung eines Gangs einer Schaltung (180) eines Fahrzeugs, insbesondere eines Fahrrads, wobei
• eine Anfahrsituation des Fahrzeugs erkannt wird und
• eine Fahrwiderstandsgröße erfasst wird, die einen erwarteten Fahrwiderstand des Fahrzeugs repräsentiert, und
• eine Antriebskraftgröße erfasst wird, die die erwartete Antriebskraft des Fahrzeugs repräsentiert, und
• die Schaltung (180) in Abhängigkeit von der erkannten Anfahrsituation und der Differenz der Antriebskraftgröße und der Fahrwiderstandgröße betätigt wird.

2. Verfahren nach Anspruch 1, **dadurch gekennzeichnet, dass** bei einer großen Differenz ein hoher Gang und bei einer kleinen Differenz ein niedriger Gang der Schaltung (180) eingestellt wird.

3. Verfahren nach Anspruch 1 oder 2, **dadurch gekennzeichnet, dass** die Fahrwiderstandsgröße in Abhängigkeit von
• dem Neigungswinkel des Fahrzeugs, und/oder
• der Gesamtmasse des Fahrzeugs
erfasst wird.

4. Verfahren nach Anspruch 3, **dadurch gekennzeichnet, dass** die Gesamtmasse des Fahrzeugs aus der Fahrdynamik des Fahrzeugs abgeleitet wird.

5. Verfahren nach einem der vorhergehenden Ansprüche, **dadurch gekennzeichnet, dass** die Antriebskraftgröße in Abhängigkeit von einer Tretkraftgröße erfasst wird, die die Tretkraft eines das Fahrrad mittels Muskelkraft antreibenden Fahrers repräsentiert.

6. Verfahren nach Anspruch 5, **dadurch gekennzeichnet, dass** das Fahrrad einen Motor aufweist, der zum Antrieb des Fahrrads beiträgt, wobei die Antriebskraftgröße in Abhängigkeit von einer Unterstützungsstufe erfasst wird, die das vom Fahrer gewählte einstellbare Verhältnis des per Muskelkraft erzeugten Antriebs zum per Motorkraft erzeugten Antriebs repräsentiert.

7. Verfahren nach Anspruch 5 oder 6, **dadurch gekennzeichnet, dass** die Tretkraftgröße des Fahrers aus wenigstens einer vor der erkannten Anfahrsituation erfassten Betriebssituation abgeleitet wird, insbesondere einer zeitlich früheren Anfahrsituation.

8. Verfahren nach einem der vorhergehenden Ansprüche, **dadurch gekennzeichnet, dass** die Betätigung der Schaltung zusätzlich in Abhängigkeit von der Schaltdynamik der Gangschaltung erfolgt.

9. Verfahren nach einem der vorhergehenden Ansprüche, **dadurch gekennzeichnet, dass** die Anfahrsituation aus der Erkennung eines Haltevorgangs des Fahrzeugs abgeleitet wird, so dass die Schaltung (140) bereits beim Anhalten bzw. Abstellen des Fahrzeugs in Abhängigkeit von der erkannten Anfahrsituation und der Differenz der Antriebskraftgröße und der Fahrwiderstandgröße betätigt wird.

10. Steuereinheit (100) zur Steuerung einer Schaltung (180) eines Fahrzeugs, insbesondere eines Fahrrads, wobei die Steuereinheit (100)
• aus den Betriebsdaten des Fahrzeugs eine Anfahrsituation erkennt, und
• eine Fahrwiderstandsgröße erfasst, die einen erwarteten Fahrwiderstand des Fahrzeugs repräsentiert, und
• eine Antriebskraftgröße erfasst, die die erwartete Antriebskraft des Fahrzeugs repräsentiert,
• in Abhängigkeit von der erkannten Anfahrsituation und der Differenz der Antriebskraftgröße und der Fahrwiderstandgröße die Schaltung (180) betätigt.

11. Steuereinheit (100) nach Anspruch 10, **dadurch gekennzeichnet, dass** bei einer großen Differenz ein hoher Gang und bei einer kleinen Differenz ein niedriger Gang der Schaltung (180) eingestellt wird.

12. Steuereinheit (100) nach Anspruch 10 oder 11, **dadurch gekennzeichnet, dass** die Steuereinheit (100) mittels eines Steigungssensors (130) eine Neigungsgröße erfasst, die den Neigungswinkel des Fahrzeugs zur Fahrbahn repräsentiert und die Fahrwiderstandsgröße in Abhängigkeit von der Neigungsgröße erfasst.

13. Steuereinheit (100) nach einem der Ansprüche 10 bis 12, **dadurch gekennzeichnet, dass** die Steuereinheit (100) mittels eines Tretkraftsensor (160) eine Tretkraftgröße erfasst, die die durch den Fahrer eines das Fahrrad antreibenden Muskelkraft repräsentiert, und die Antriebsgröße in Abhängigkeit der Tretkraftgröße erfasst.

14. Steuereinheit (100) nach Anspruch 13, **dadurch gekennzeichnet, dass** die Steuereinheit (100) die Antriebsgröße in Abhängigkeit einer Unterstützungsstufe erfasst, die das Verhältnis zwischen der Tretkraftgröße und einer den Antrieb durch einen am Fahrrad vorhandenen Motor repräsentierenden Motorkraftgröße abbildet.

15. Fahrzeug, insbesondere ein Fahrrad, mit einer Steuereinheit (100) nach einem der Ansprüche 10 bis 14, welches ein Verfahren nach einem der Ansprüche 1 bis 9 ausführt und einer Schaltung (180), wobei die Steuereinheit (100)
• aus den Betriebsdaten des Fahrzeugs eine Anfahrsituation erkennt, und
• eine Fahrwiderstandsgröße erfasst, die einen erwarteten Fahrwiderstand des Fahrzeugs repräsentiert, und
• eine Antriebskraftgröße erfasst, die die erwartete Antriebskraft des Fahrzeugs repräsentiert,
• in Abhängigkeit von der erkannten Anfahrsituation und der Differenz der Antriebskraftgröße und der Fahrwiderstandgröße die Schaltung (180) betätigt.
